# EUROPEAN PATENT APPLICATION

(11) **EP 1 748 685 A1**
(43) Date of publication of application: **31.01.2007**
(21) Application number: 05016368.2
(22) Date of filing: 28.07.2005
(51) Int. Cl.: H05B 41/288

(54) **Single-chip driving device for a high intensity discharge lamp**

(71) Applicant: KAOYI ELECTRONIC CO., LTD., He Mei Chen Changhua Hsien (TW)
(72) Inventor: Lu, Lien-Fu, He Mei Chen Changhua Hsien (TW)
(74) Representative: Reichel, Wolfgang

(57) **Abstract**

A single-chip driving device for a high intensity discharge lamp includes a high voltage direct current electric power supply system (1), a power control circuit (2), a frequency transformation circuit (3), and an ignition steady current circuit (4). The high voltage direct current electric power supply system transforms an external power supply into a relatively higher voltage direct current electric power. The power control circuit transforms the relatively higher voltage direct current electric power into a relatively lower voltage and higher frequency direct current electric power. The frequency transformation circuit transforms the relatively lower voltage and higher frequency direct current electric power into a relatively lower voltage and lower frequency direct current electric power so as to drive the ignition steady current circuit.

## Description

The present invention relates to a single-chip driving device, and more particularly to a single-chip driving device for a high intensity discharge (H.I.D.) lamp.

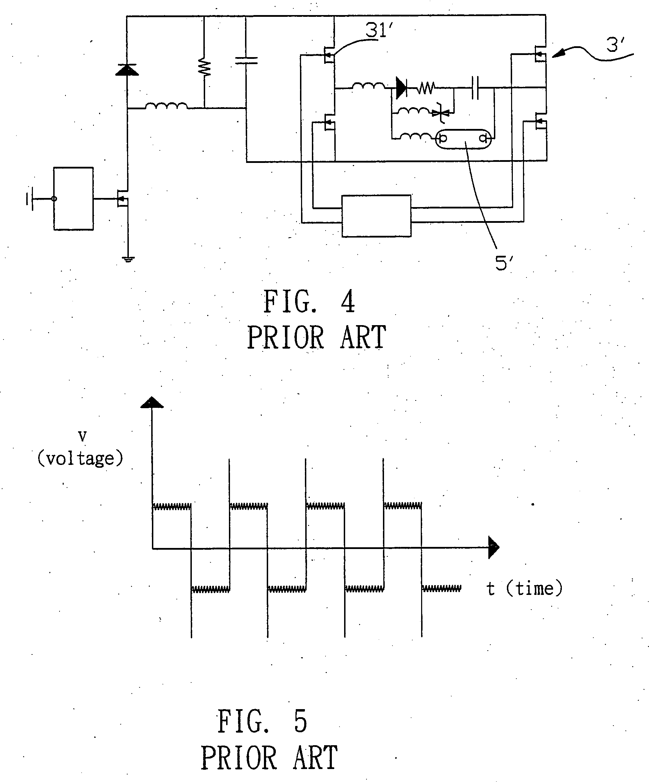

A conventional full-bridge driving device for a high intensity discharge (H.I.D.) lamp 5' in accordance with the prior art shown in Figs. 4 and 5 comprises a full-bridge frequency transformation circuit 3' having four power transistors 31' to perform a frequency transformation function so as to drive a load, such as the high intensity discharge lamp 5'. However, the output waveform from the full-bridge frequency transformation circuit 3' as shown in Fig. 5 ("v" is the voltage, and "t" is the time) contains multiple upward and downward high voltage impulse waves, so that the full-bridge frequency transformation circuit 3' easily produces problems of interference and high voltage arcing discharge on the printed circuit board, thereby increasing costs of the interference suppress treatment, and thereby easily causing an electricity leakage. In addition, the full-bridge frequency transformation circuit 3' has four power transistors 31'. According to the Ohm's law, P=I²×R, wherein P is the power, I is the current and R is the resistance (Rdson of each power transistor). The required power of the conventional full-bridge driving device is P=I²×(R1+R2+R3+R4), so that the conventional full-bridge driving device has a larger heat loss, thereby increasing the costs of fabrication, decreasing the working efficiency and decreasing the lifetime of the heating elements.

A conventional semi-bridge driving device for a high intensity discharge (H.I.D.) lamp comprises a semi-bridge frequency transformation circuit having two power transistors to perform a frequency transformation function so as to drive a load, such as a high intensity discharge lamp. However, the power control circuit of the conventional semi-bridge driving device needs an additional voltage buck (drop) power transistor and a super fast diode so that the load (such as the high intensity discharge lamp) is operated smoothly without blinking or breaking. Thus, the conventional semi-bridge driving device has more power elements, thereby increasing the heat loss, increasing the costs of fabrication, decreasing the working efficiency and decreasing the lifetime of the heating elements. In addition, the conventional semi-bridge driving device also has problems of interference and high voltage arcing discharge.

It is the problem underlying the invention to overcome these disadvantages. The problem is solved by a single-chip driving device comprising:
a high voltage direct current electric power supply system to output a relatively higher voltage direct current electric power to provide a required electric energy;
a power control circuit including a control loop, a power transistor, and an inductor, wherein
the control loop provides a relatively higher frequency signal to control the power transistor so that the power transistor is driven to push the inductor which is operated successively at a relatively higher frequency to store and discharge an energy successively at a relatively higher speed, thereby forming an energy storage tank with a potential;
when the energy storage tank stores and discharges the energy, the relatively higher voltage direct current electric power shares a partial potential, so that the relatively higher voltage direct current electric power is transformed into a relatively lower voltage and higher frequency direct current electric power;
a frequency transformation circuit including a frequency control integrated circuit, and a single power transistor, wherein
the frequency control integrated circuit has a working frequency that can be preset independently to control the single power transistor to transform the relatively lower voltage and higher frequency direct current electric power from the power control circuit into a relatively lower voltage and lower frequency direct current electric power that can be preset independently for a load;
an ignition steady current circuit including an ignition capacitor, an ignition bi-directive sidac, and a transformer, wherein
after the ignition steady current circuit receives the relatively lower potential from the power control circuit and the relatively lower frequency electric power from the frequency transformation circuit, the ignition capacitor is charged until a potential of the ignition capacitor reaches a breakdown voltage of the ignition bi-directive sidac, so that the ignition bi-directive sidac is conducted;
after the ignition bi-directive sidac is conducted, the ignition capacitor is started to discharge, and a current of the ignition capacitor passes through the first side coil of the transformer, so that a high voltage pulse is formed at the second side coil of the transformer so as to ignite the load.

In such a manner, the high voltage direct current electric power supply system transforms an external power supply into a relatively higher voltage direct current electric power.

In addition, the power control circuit transforms the relatively higher voltage direct current electric power into a relatively lower voltage and higher frequency direct current electric power. Thus, the potential is reduced by oscillation of the relatively higher frequency so as to reach the voltage required for the normal working condition of the load.

Further, the frequency transformation circuit transforms the relatively lower voltage and higher frequency direct current electric power into a relatively lower voltage and lower frequency direct current electric power to drive the ignition steady current circuit so as to light up the high intensity discharge lamp, thereby preventing the gas contained in the high intensity discharge lamp from producing acoustic resonances due to a relatively higher frequency.

Further benefits and advantages of the present invention will become apparent after a careful reading of the detailed description with appropriate reference to the accompanying drawings.

In the drawings:
Fig. 1 is a circuit layout of a single-chip driving device in accordance with the preferred embodiment of the present invention;
Fig. 2 is a block flow chart of the single-chip driving device as shown in Fig. 1;
Fig. 3 is a plan profile showing a load waveform of the single-chip driving device as shown in Fig. 1;
Fig. 4 is a circuit layout of a conventional driving device in accordance with the prior art ; and
Fig. 5 is a plan profile showing a load waveform of the conventional driving device as shown in Fig. 4.

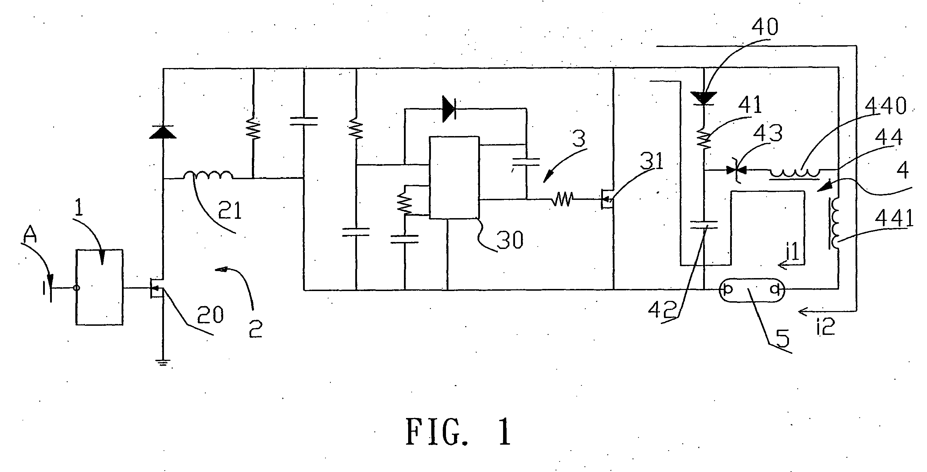

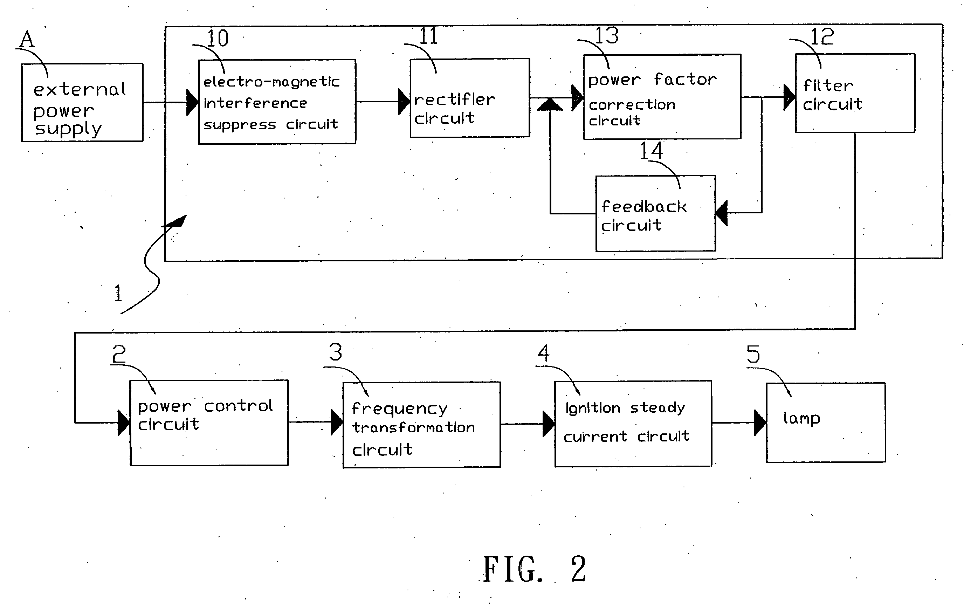

Referring to the drawings and initially to Figs. 1 and 2, a single-chip driving device for a high intensity discharge (H.I.D.) lamp 5 in accordance with the preferred embodiment of the present invention comprises a high voltage direct current electric power supply system 1, a power control circuit 2, a frequency transformation circuit 3, and an ignition steady current circuit 4.

The high voltage direct current electric power supply system 1 includes an electro-magnetic interference suppress circuit 10, a rectifier circuit 11, a filter circuit 12, a power factor correction circuit 13, and a feedback circuit 14. An external power supply "A" supplies an electric power to the high voltage direct current electric power supply system 1. If the electric power from the external power supply "A" is an alternating current electric power, the electric power is rectified by the rectifier circuit 11 to form a positive voltage mode with ripples. Then, the power factor correction circuit 13 transforms the positive voltage mode with ripples into a relatively higher voltage direct current electric power according to the information provided by the feedback circuit 14. Then, the filter circuit 12 filters and outputs the relatively higher voltage direct current electric power to provide a required electric energy.

The power control circuit 2 is connected to the relatively higher voltage direct current electric power supply system 1 and includes a control loop, a power transistor 20, and an inductor 21. The control loop provides a relatively higher frequency signal to control the power transistor 20 so that the power transistor 20 oscillates to push the inductor 21 which is operated successively at a relatively higher frequency to store and discharge an energy successively at a relatively higher speed, thereby forming an energy storage tank with a potential. When the energy storage tank stores and discharges the energy, the relatively higher voltage direct current electric power shares a partial potential, so that the relatively higher voltage direct current electric power is reduced to have a relatively lower voltage (or potential). Thus, the power control circuit 2 is called a voltage buck control circuit.

The frequency transformation circuit 3 is connected to the power control circuit 2 and includes a frequency control integrated circuit (IC) 30, and a single power transistor 31. The frequency control integrated circuit 30 has a working frequency that can be preset independently to control the single power transistor 31 to transform a relatively higher frequency electric power into a relatively lower frequency electric power that can be preset independently, thereby forming a relatively lower frequency carrier having a relatively lower frequency to carry a relatively higher frequency. Thus, the relatively lower frequency electric power (or carrier) bears all of the work so as to fit a working situation of the high intensity discharge lamp 5. It is to be noted that the high intensity discharge lamp 5 has to be worked at a relatively lower frequency. When the high intensity discharge lamp 5 is worked at a relatively higher frequency, the high intensity discharge lamp 5 is worked unstably due to acoustic resonances so that the high intensity discharge lamp 5 easily blinks and produces noise or evenly breaks. Thus, it is necessary to transform a relatively higher frequency electric power into a relatively lower frequency electric power so as to fit the working situation of the high intensity discharge lamp 5.

The ignition steady current circuit 4 is connected to the frequency transformation circuit 3 and the high intensity discharge lamp 5 and includes an ignition diode 40, an ignition resistor 41, an ignition capacitor 42, an ignition bi-directive sidac 43, and a transformer 44. After the ignition steady current circuit 4 receives the relatively lower potential from the power control circuit 2 and the relatively lower frequency electric power from the frequency transformation circuit 3, the ignition steady current circuit 4 is divided into a first loop i 1 and a second loop i2. A current passing through the first loop i 1 in turn passes through the ignition diode 40 and the ignition resistor 41 to charge the ignition capacitor 42 until the potential of the ignition capacitor 42 reaches the breakdown voltage of the ignition bi-directive sidac 43, so that the ignition bi-directive sidac 43 is conducted automatically. After the ignition bi-directive sidac 43 is conducted, the ignition capacitor 42 is started to discharge, and the current of the ignition capacitor 42 passes through the transformer 44, so that a first side coil 440 of the transformer 44 is excited to drive a second side coil 441 of the transformer 44 to instantaneously excite a relatively higher voltage pulse of thousands of volts so as to trigger the high intensity discharge lamp 5. After the high intensity discharge lamp 5 is triggered by the relatively higher voltage impulse to produce an arcing discharge action, the gas contained in the high intensity discharge lamp 5 forms an avalanche multiplication so that an electric arc is produced between the two electrodes of the high intensity discharge lamp 5 to conduct the two electrodes of the high intensity discharge lamp 5. Subsequently, the second loop i2 functions to provide an electric energy and to maintain stability of the load current, so that the high intensity discharge lamp 5 is ignited smoothly and is maintained at a working situation stably.

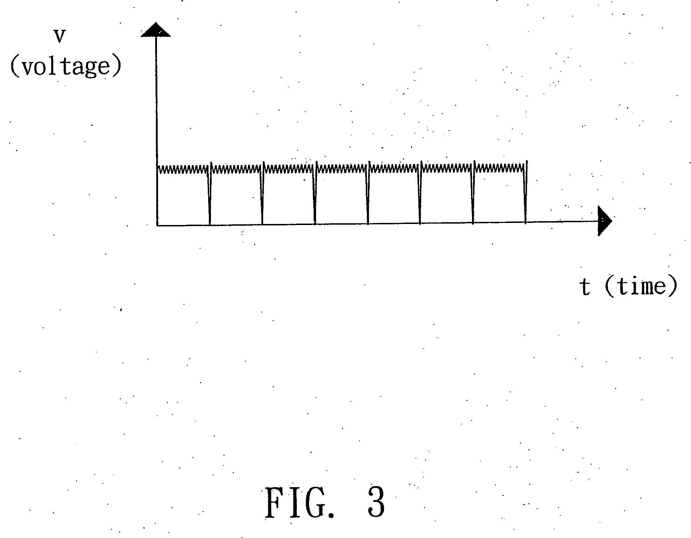

As shown in Fig. 3, the voltage "v" has a constant value and is not changed with the time "t" so that the output waveform is maintained at a constant value. The integrated circuit of the single-chip driving device of the present invention is unlike that of the conventional device, such as UBA2030T, UBA2032T, UBA2033T or the like. In the preferred embodiment of the present invention, the single-chip driving device comprises a frequency transformation circuit 3 having a frequency control integrated circuit 30 having a working frequency that can be preset independently to control the single power transistor 31. Thus, the single-chip driving device comprises a single-chip frequency transformation circuit 3, thereby reducing the heat loss, reducing costs of the parts, increasing the working efficiency, and enhancing the reliability. In addition, the output waveform for driving the load (such as the high intensity discharge lamp 5) will not produce interference and high voltage arcing discharge on the printed circuit board.

In such a manner, the electronic ballast of the high intensity discharge lamp 5 is provided with a single-chip frequency transformation circuit 3, without having to provide a full-bridge or semi-bridge frequency transformation circuit, and without having to provide a power element that will produce a larger heat energy, thereby reducing the temperature rise, enhancing the lifetime of the element, and solving the problems of interference and high voltage arcing discharge.

In comparison, in the conventional full-bridge driving device as shown in Figs. 4 and 5, the full-bridge frequency transformation circuit 3' has four power transistors 31'. According to the Ohm's law, P=I²×R, wherein P is the power, I is the current and R is the resistance. The required power of the conventional full-bridge driving device is P=I²×(R1+R2+R3+R4), and the required power of the single-chip driving device of the present invention is P=I²×R. Thus, the required power of the single-chip driving device of the present invention is about 25% of that of the conventional full-bridge driving device, thereby saving about 75% of power loss. In addition, the single-chip driving device of the present invention needs not to provide multiple driving loops and float pumps, thereby simplifying the construction of the single-chip driving device and greatly reducing the costs of fabrication. Further, the single-chip frequency transformation circuit 3 of the single-chip driving device of the present invention reduces the temperature rise, so that the frequency control integrated circuit 30 can control the single power transistor 31 efficiently, thereby enhancing the working frequency of the single-chip driving device.

Although the invention has been explained in relation to its preferred embodiment(s) as mentioned above, it is to be understood that many other possible modifications and variations can be made without departing from the scope of the present invention. It is, therefore, contemplated that the appended claim or claims will cover such modifications and variations that fall within the true scope of the invention.

## Claims

1. Single-chip driving device, comprising:
a high voltage direct current electric power supply system (1) to output a relatively higher voltage direct current electric power to provide a required electric energy:
a power control circuit (2) including a control loop, a power transistor, and an inductor, wherein
the control loop provides a relatively higher frequency signal to control the power transistor (20) so that the power transistor is driven to push the inductor (21) which is operated successively at a relatively higher frequency to store and discharge an energy successively at a relatively higher speed, thereby forming an energy storage tank with a potential; when the energy storage tank stores and discharges the energy, the relatively higher voltage direct current electric power shares a partial potential, so that the relatively higher voltage direct current electric power is transformed into a relatively lower voltage and higher frequency direct current electric power;
a frequency transformation circuit (3) including a frequency control integrated circuit (30), and a single power transistor (31), wherein
the frequency control integrated circuit (30) has a working frequency that can be preset independently to control the single power transistor (31) to transform the relatively lower voltage and higher frequency direct current electric power from the power control circuit (2) into a relatively lower voltage and lower frequency direct current electric power that can be preset independently for a load;
an ignition steady current circuit (4) including an ignition capacitor (42), and ignition bi-directive sidac (43), and a transformer wherein after the ignition steady current circuit (4) receives the relatively lower potential from the power control circuit (2) and the relatively lower frequency electric power from the frequency transformation circuit (3), the ignition capacitor (42) is charged until a potential of the ignition capacitor reaches a breakdown voltage of the ignition bi-directive sidac (43), so that the ignition bi-directive sidac is conducted;
after the ignition bi-directive sidac (43) is conducted the ignition capacitor (42) is started to discharge, and a current of the ignition capacitor (42) passes through the first side coil (440) of the transformer (44), so that a high voltage pulse is formed at the second side coil (441) of the transformer so as to ignite the load (5).

2. Single-chip driving device in accordance with claim 1,
wherein the transformer (44) has a first side coil (440) and a second side coil (441), the second side coil of the transformer is serially connected to the load (5), so that the load is driven by the relatively lower frequency electric power.

3. Single-chip driving device in accordance with claim 1,
wherein the high voltage direct current electric power supply system (1) includes an electro-magnetic interference suppress circuit (10), a rectifier circuit (11), a filter circuit (12), a power factor correction circuit (13), and a feedback circuit (14).

4. Single-chip driving device in accordance with claim 1,
wherein the power control circuit (2) is connected to the high voltage direct current electric power supply system (1).

5. Single-chip driving device in accordance with claim 1,
wherein the power control circuit (2) is a voltage buck control circuit.

6. Single-chip driving device in accordance with claim 1,
wherein the frequency transformation circuit (3) is connected to the power control circuit (2).

7. Single-chip driving device in accordance with claim 1,
wherein the ignition steady current circuit (4) is connected to and driven by the frequency transformation circuit (3) and the load (5).

8. Single-chip driving device in accordance with claim 1,
wherein the ignition steady current circuit (4) further includes an ignition diode (40), and an ignition resistor (41).

9. Single-chip driving device in accordance with claim 1,
wherein the high voltage direct current electric power supply system transforms an external power supply into a relatively higher voltage direct current electric power.

10. Single chip driving device in accordance with claim 9,
wherein the power control circuit (2) transforms the relatively higher voltage direct current electric power into a relatively lower voltage and higher frequency direct current electric power.
